# EUROPÄISCHE PATENTANMELDUNG

(11) **EP 0 667 256 A2**
(43) Veröffentlichungstag der Anmeldung: **16.08.1995**
(21) Anmeldenummer: 94120889.4
(22) Anmeldetag: 29.12.1994
(51) Int. Cl.: B60N 2/22

(54) **Kinderstützvorrichtung für Autositze**

(30) Priorität: 01.02.1994 DE 4402962
(71) Anmelder: HAGUS C. LUCHTENBERG GmbH & Co. KG, D-42719 Solingen (DE)
(72) Erfinder: Luchtenberg, Curt, D-42719 Solingen (DE)
(74) Vertreter: Selting, Günther, Dipl.-Ing.

(57) **Zusammenfassung**

Bei der Kinderstützvorrichtung für Autositze ist in einen Schaumstoff-Formkörper (12) eines Kopf- und Rückenteiles (11) ein starres Skelettgerüst (30) in Form eines geschlossenen Rahmens (31) eingebettet. Zur Befestigung an der Rückenlehne des Autositzes dient eine Gurtanordnung (20), deren beiden Enden an dem Skelettgerüst (30) befestigt sind und mit diesem eine um die Rückenlehne (13) des Autositzes herumgeführte Schleife bilden. Es ergibt sich eine Kinderstützvorrichtung, die sich sicher befestigen läßt und bei hohem Sitzkomfort eine korrekte Kopfabstützung gewährleistet.

## Beschreibung

Die Erfindung bezieht sich auf eine Kinderstützvorrichtung für Autositze gemäß dem Oberbegriff des Anspruches 1.

Kinderstützvorrichtungen sind separate Konstruktionen, die von einem Benutzer in sein Fahrzeug eingebaut werden und solange in diesem verbleiben, bis das Kind herangewachsen ist und der Kinderstützvorrichtung nicht mehr bedarf. Eine aus EP-A-0408415 bekannte Kinderstützvorrichtung ist als gepolsterter sesselartiger Schalenkörper aus Kunststoff ausgebildet, bei dem sich das Kopf- und Rückenteil einstückig an ein Sitzteil anschließt. In dem Schalenkörper ist ein geschlossener starrer Rahmen teilweise versenkt. Obere und untere Rahmenabschnitte stehen an der Rückseite und der Unterseite über den Schalenkörper nach außen vor. Zur Befestigung auf einem Fahrzeugsitz sind über diese Rahmenabschnitte Partien üblicher Personen-Sicherheitsgurte verlegt und mittels des Gurtschlosses gesichert. Eine solche Befestigung hat den Nachteil, daß die Sicherheitsgurte im allgemeinen locker verlaufen und erst bei einer auf das Gewicht einer herangewachsenen Person abgestimmten Zugbelastung im Falle einer plötzlichen Fahrtabbremsung straff sind. Dies bedeutet, daß die Kinderstützvorrichtung auf dem Fahrzeugsitz nicht festgespannt ist, so daß die Gefahr besteht, daß der Schalenkörper bei unruhigem Verhalten des Kindes kippt und das Kind gefährdet wird. Außerdem ist der sesselartige Schalenkörper trotz seiner Polsterung im Sitzbereich nicht immer bequem. Versucht man diesen Mangel durch Einlegen eines Kissens zu beheben, so wird die Sitzhöhe möglicherweise so verändert, daß das Kopfteil relativ zum Kinderkopf zu niedrig sitzt. Dies ist außerordentlich gefährlich, weil bei plötzlicher Abbremsung des Fahrzeuges der nach hinten geschleuderte Kopf nicht mehr ordnungsgemäß abgestützt wird und die Kinderstützvorrichtung ihre Aufgabe nicht erfüllen kann.

Ferner ist aus DE-A-27 18 237 eine AufsatzKopfstütze bekannt, bei der ein Kopfpolster an einem Rückenlehnen-Aufsteckteil befestigt ist, das aus einem Rückenstützteil und einem Übergriffsteil gebildet ist. In die Innenfläche des Rückenstützteiles und des Übergriffsteiles ist je ein gabelförmiges Tragskelett eingelassen. An den freien Endbereichen des Rückenstützteiles und des Übergriffsteiles sind Spannriemen befestigt, welche die Rükkenlehne unterseitig umgreifen und auf der Rückseite der Rückenlehne Verschlußmittel aufweisen. Da sowohl das Rückenstützteil als auch das Übergriffsteil im wesentlichen als Polsterplatte ausgebildet sind, ist die Verankerung der Spannriemen an diesen Polsterplatten im Falle einer plötzlichen Fahrzeugabbremsung und entsprechender Zugeinwirkung auf die Spannriemen unzureichend; sie reißen ab und die Aufsatzkopfstütze kommt von der Rückenlehne frei.

Der Erfindung liegt die Aufgabe zugrunde, eine Kinderstützvorrichtung so auszubilden, daß sie sich sicher befestigen läßt und bei hohem Sitzkomfort eine korrekte Kopfabstützung gewährleistet.

Diese Aufgabe wird erfindungsgemäß dadurch gelöst, daß das Skelettgerüst in Form eines geschlossenen Rahmens in einen Schaumstoff-Formkörper eines Kopf- und Rückenteiles des Stützaufbaus eingebettet ist, und daß die Gurtanordnung mit dem Skelettgerüst eine um die Rückenlehne des Autositzes herumgeführte Schleife bildet, die auf der Rückseite der Rückenlehne verschließbar ist.

Die Gurtanordnung der Kinderstützvorrichtung bildet mit dem Skelettgerüst eine um die Rückenlehne eines Autositzes herumgeführte straffe Schleife, die sich auf der Rückseite der Rückenlehne schließen läßt, so daß sie - bei Anbringung der Kinderstützvorrichtung an einem Rücksitz - vom Fahrzeuginnenraum her unzugänglich ist und nicht zufällig geöffnet werden kann. Das starre Skelettgerüst und die Gurtanordnung bilden einen zuverlässigen Träger und Halter für den Schaumstoff-Formkörper, der kein Sitzteil aufweist, so daß das Kind bequem auf dem Polster des Autositzes oder auf einem zusätzlichen Kissen sitzt und immer gewährleistet ist, daß sich das Kopfteil relativ zur Sitzhöhe des Kindes in richtiger Position befindet. Die Montage und Demontage der Kinderstützvorrichtung ist einfach und läßt sich schnell durchführen.

In vorteilhafter Ausgestaltung der Erfindung ist vorgesehen, daß der geschlossene Rahmen sich über die Länge des Kopf- und Rückenteiles erstreckt und daß im Bereich eines Kopfstützabschnittes des Kopf- und Rückenteiles aus der Ebene des Rahmens ein Bügel nach hinten abgewinkelt ist. Vorzugsweise sind der Rahmen und der Bügel eine Metallrohrkonstruktion, die sich durch besondere Festigkeit auszeichnet. Während der vorzugsweise ebene Rahmen das Kopf- und Rückenteil skelettartig stabilisiert, dient der vorstehende Bügel als gegen den oberen Rand der Rückenlehne anliegendes Auflageelement, das die Kinderstützvorrichtung in gewünschter Höhe hält und mit dem das eine Ende der Gurtanordnung verbunden ist. Das andere Ende der Gurtanordnung greift an den unteren Bereich des Rahmens an.

Die Gurtanordnung ist vorzugsweise spannbar, so daß ein festes Anziehen des Kopf- und Rückenteiles gegen die Autositz-Rückenlehne möglich ist. Der feste Sitz der Kinderstützvorrichtung wird durch gelegentliches Nachspannen der Gurtanordnung gewährleistet.

Die Gurtanordnung weist ein breites Band auf, das sich an den unteren Bereich des Rahmens anschließt und das am freien Ende einen Gurt mit einer Spannvorrichtung trägt. Der Vorteil des breiten Bandes besteht darin, daß es sich an der Umlenkstelle der Gurtanordnung von der Vorderseite der Rückenlehne zu ihrer Rückseite praktisch einschnürungsfrei um diese herumlegt, so daß Deformationen und Scheuerstellen unterbleiben. Außerdem bildet das breite Band ein Umschlingungsteil, das zu dem Bügel etwa parallel verläuft, so daß eine kippsichere Festspannung der Kinderstützvorrichtung an der Autositz-Rückenlehne erfolgt.

Der elastisch nachgiebige Schaumsstoff-Formkörper ist ohne zusätzliche Polsterung weich und bequem und kann ohne Festigkeitseinbuße verwendet werden, weil die Stabilität der Kinderstützvorrichtung durch das starre Skelettgerüst garantiert wird. Der Schaumstoff-Formkörper im Rücken- und Kopfbereich und die durch beliebig dicke Sitzkissen gepolsterte Sitzfläche sorgen für hohe Bequemlichkeit des sitzenden Kindes.

In der Zeichnung ist ein Ausführungsbeispiel der Erfindung schematisch dargestellt. Es zeigt:
Fig. 1 eine Seitenansicht einer an einem Fahrzeug-Rücksitz montierten Kinderstützvorrichtung;

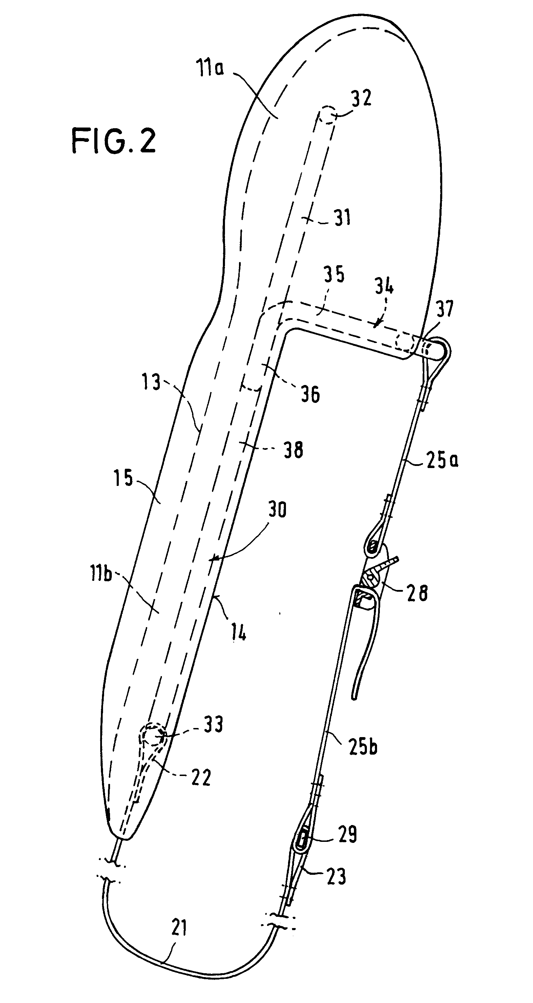

Fig. 2 die Kinderstützvorrichtung nach Fig. 1 in vergrößertem Maßstab zur Veranschaulichung von Einzelheiten;
Fig. 3 eine Rückansicht der Kinderstützvorrichtung nach Fig. 2 und
Fig. 4 einen Schnitt längs der Linie IV - IV in Fig. 3.

An einer klappbaren Rückenlehne B eines Rücksitzes A eines Fahrzeuges ist eine Kinderstützvorrichtung 10 befestigt. Die Kinderstützvorrichtung 10 besteht aus einem Kopf- und Rückenteil 11 und einer Gurtanordnung 20, die einen Teil der Rückenlehne B umschlingt.

Das Kopf- und Rückenteil 11 ist aus einem Kunststoff-Formkörper 12 aus elastisch nachgiebigem Schaumstoff hergestellt, in den ein starres Skelettgerüst 30 eingebettet ist. Das Skelettgerüst 30 besteht aus einem ebenen, rechteckigen Rahmen 31 aus Metallrohr, dessen Seiten zueinander parallel verlaufen und dessen Ecken abgerundet sind. Die obere Seite 32 des Rahmens 31 verläuft innerhalb eines dicken Kopfstützabschnittes 11 a, während die untere Seite 33 des Rahmens 31 sich im unteren Bereich eines Rückenstützabschnittes 11 des Kopf- und Rückenteiles 11 befindet. Die Vorderseite 13 des Rückenstützabschnittes 11 ist über seine Höhe und Breite im wesentlichen ebenflächig. Lediglich an den beiden Längsrändern sind schräg nach vorne gerichtete, längsverlaufende Leisten 15 aus festem Schaumstoff angeformt, die den Körper des sitzenden Kindes seitlich stabilisieren und die Bequemlichkeit erhöhen. Der Kopfstützabschnitt 11 ist in Bezug auf die Vorderseite 13 des Rückenstützabschnittes 11 b nur geringfügig vorgewölbt. Seine Rückseite ragt über die Rückseite 14 des Rückenstützabschnittes 11 nach hinten vor. Das gesamte Kopf- und Rückenteil 11 ist mit Stoff bezogen.

In den dicken Schaumstoffklotz des Kopfstützabschnittes 11 ist an seinem unteren Ende ein Bügel 34 eingebettet, der zur Ebene des Rahmens 31 etwa senkrecht nach hinten abgewinkelt ist und der aus dem gleichen Metallrohrmaterial wie der Rahmen 31 bestehen kann. Vorzugsweise ist der Bügel 34 in Draufsicht etwa U-förmig (Fig. 4) und hat an den Enden seiner parallelen Schenkel 35 etwa rechtwinklig abgebogene Endstücke 36. Die Endstücke 36 sind mit den beiden Längsseiten 38 des Rahmens 31 vorzugsweise nach unten ragend verschweißt. Die Basisseite des Bügels 34 hat in der Mitte eine über die Rückseite des Kopfstützabschnittes 11a nach außen vorstehende Abkröpfung, die eine Öse 37 bildet.

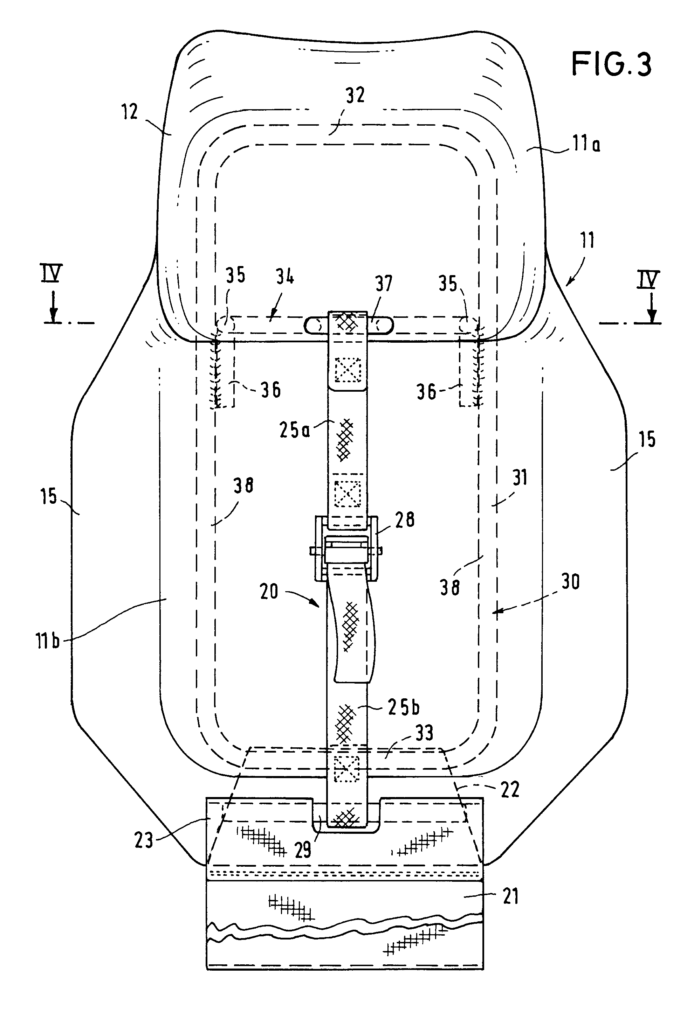

Mit dem Rahmen 31 ist die Gurtanordnung 20 verbunden. Diese besteht aus einem breiten Band 21 aus zugfestem Gurtmaterial und einem verhältnismäßig schmalen Gurt 25, der eine Spannvorrichtung 28 aufweist. Das eine Ende 22 des breiten Bandes 21 ist - wie in Fig. 3 angedeutet - um die untere Seite 33 des Rahmens 31 herumgelegt und vorzugsweise festgenäht. Das andere Ende 23 des Bandes 21 ist mit einem ersten Abschnitt 25b des Gurtes 25 z. B. mittels eines eingenähten Metallstabes 29 verbunden. Mit der Öse 37 des Bügels 34 ist ein Ende eines zweiten Gurtabschnittes 25a durch Umschlingung und Vernähung verbunden. Der zweite Gurtabschnitt 25a trägt an seinem unteren Ende die Spannvorrichtung 28, die das Ende des ersten Gurtabschnittes 25b aufnimmt und dazu dient, das gegen den oberen Rand der Rückenlehne B abgestützte Kopf- und Rückenteil 11 an der Rückenlehne B festzuspannen.

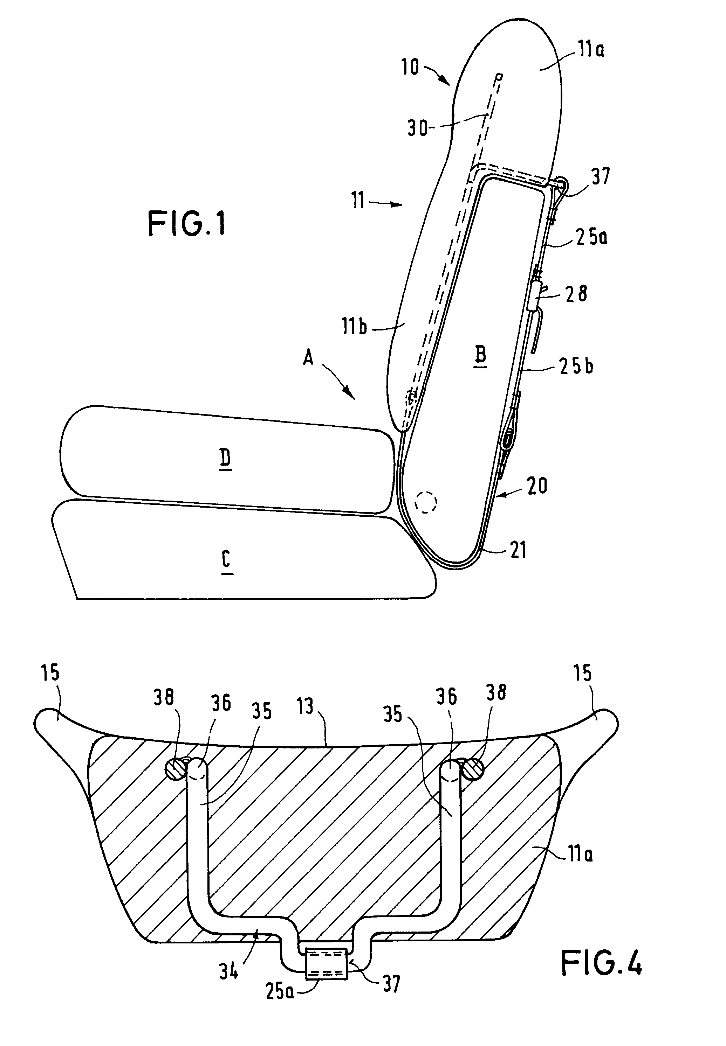

Das breite Band 21 läßt sich durch die Fuge zwischen der klappbaren Rückenlehne B und dem Sitzpolster C nach hinten hindurchziehen (Fig. 1) und erstreckt sich ein Stück über die Höhe der Rückenlehne B. Zur Anpassung der Kopfhöhe eines sitzenden Kindes an die Position des Kopfstützabschnittes 11 ist auf das Sitzpolster C ein Polsterkissen D aufgelegt, das das Kind in die richtige Sitzhöhe bringt. Die geschlossene Schleife des Rahmens 31 und der Gurtanordnung 20 hält das Kopf- und Rückenteil 11 in der vorgesehenen Position sicher fest. Bei Anbringung der Vorrichtung an einem Autorücksitz ist die Spannvorrichtung für Fahrzeuginsassen unzugänglich und sicher auf der Lehnenrückseite verborgen.

Wenn das Einfädeln des Gurtabschnittes 25b in die Spannvorrichtung 28 bei der Montage der Kinderstützvorrichtung 11 vermieden werden soll, kann am oberen Ende des Gurtabschnittes 25a ein Haken angebracht sein, der in die Öse 37 lösbar eingehängt wird.

## Patentansprüche

1. Kinderstützvorrichtung für Autositze mit einem durch ein starres Skelettgerüst (30) verstärkten Stützaufbau, der mittels einer Gurtanordnung an der Rückenlehne des Autositzes befestigt ist,
dadurch gekennzeichnet,
daß das Skelettgerüst (30) in Form eines geschlossenen Rahmens (31) in einen Schaumstoff-Formkörper (12) eines Kopf- und Rückenteiles (11) des Stützaufbaus eingebettet ist, und daß die Gurtanordnung (20) mit dem Skelettgerüst (30) eine um die Rückenlehne (13) des Autositzes herumgeführte Schleife bildet, die auf der Rückseite der Rückenlehne (13) verschließbar ist.

2. Kinderstützvorrichtung nach Anspruch 1, dadurch gekennzeichnet, daß der geschlossene Rahmen (31) sich über die Länge des Kopf-und Rückenteiles (11) erstreckt,
und daß im Bereich eines Kopfstützabschnittes (11 a) des Kopf- und Rückenteiles (11) aus der Ebene des Rahmens (31) ein Bügel (34) nach hinten abgewinkelt ist.

3. Kinderstützvorrichtung nach Anspruch 1 oder 2, dadurch gekennzeichnet, daß das eine Ende der Gurtanordnung (20) an dem Rahmen (31) und das andere Ende an dem Bügel (34) befestigt ist.

4. Kinderstützvorrichtung nach einem der Ansprüche 1 bis 3, dadurch gekennzeichnet, daß die Gurtanordnung (20) spannbar ist.

5. Kinderstützvorrichtung nach einem der Ansprüche 1 bis 4, dadurch gekennzeichnet, daß die Gurtanordnung (20) ein breites Band (21) aufweist, das sich an den unteren Bereich des Rahmens (31) anschließt und das am freien Ende einen Gurt (25) mit einer Spannvorrichtung (28) trägt.

6. Kinderstützvorrichtung nach einem der Ansprüche 1 bis 5, dadurch gekennzeichnet, daß der Kunststoff-Formkörper (12) aus elastisch nachgiebigem Schaumstoff gebildet ist,
und daß das Skelettgerüst (30) eine Metallrohrkonstruktion ist.
